Europäisches Patentamt

European Patent Office

Office européen des brevets

(11) Numéro de publication : **0 353 132 B1**

# (12) FASCICULE DE BREVET EUROPEEN

(45) Date de publication du fascicule du brevet :
**21.11.91 Bulletin 91/47**

(51) Int. Cl.$^5$ : **A01M 7/00**

(21) Numéro de dépôt : **89402080.9**

(22) Date de dépôt : **21.07.89**

(54) **Dispositif mobile de traitement de végétaux arborescents.**

(30) Priorité : **28.07.88 FR 8810178**

(43) Date de publication de la demande :
**31.01.90 Bulletin 90/05**

(45) Mention de la délivrance du brevet :
**21.11.91 Bulletin 91/47**

(84) Etats contractants désignés :
**DE ES FR IT**

(56) Documents cités :
**EP-A- 0 102 253**
**AU-B- 449 483**
**DE-A- 2 621 298**
**FR-A- 1 314 453**
**FR-A- 2 153 671**

(73) Titulaire : **SOCIETE NICOLAS**
**PULVERISATEURS**
**Z.I. Laville**
**F-47240 Bon Encontre (FR)**

(72) Inventeur : **Ballu, Patrick Jean-Marie**
**4 rue du Général Baratier**
**F-51100 Reims (FR)**

(74) Mandataire : **Colas, Jean-Pierre et al**
**Cabinet de Boisse 37, avenue Franklin D.**
**Roosevelt**
**F-75008 Paris (FR)**

# Description

La présente invention est relative à un dispositif mobile de traitement de végétaux arborescents, tels que arbres fruitiers ou vignes.

De tels dispositifs, dans la technique actuelle, comprennent d'une part un ventilateur capable de créer un écoulement d'air à vitesse relativement élevée, et d'autre part des pulvérisateurs munis d'ajutages capables de disperser du liquide, contenu dans une cuve et acheminé aux ajutages à l'aide d'une pompe, ces ajutages étant placés dans ledit écoulement d'air. Selon qu'on désire traiter des végétaux de faible hauteur, ou au contraire des arbres relativement élevés, on utilise divers dispositifs capables d'envoyer le jet soit du bas vers le haut, soit du haut vers le bas. Dans le premier cas, le ventilateur est généralement placé en partie basse du dispositif, et une buse ou un conduit de forme adaptée s'élève à une hauteur suffisante pour envoyer le jet d'air dans la direction convenable. Les ajutages pour la pulvérisation de liquide sont placés à la sortie des conduits de guidage de l'air, que celui-ci soit envoyé de bas en haut ou de haut en bas. Lorsqu'on veut traiter des arbres ou des haies d'une certaine hauteur, le dispositif pour guider l'écoulement d'air à une hauteur analogue à celle de la cime des arbres contient un conduit volumineux, encombrant et fragile, qui gêne les déplacements, et qui, d'autre part, entraîne, malgré ses dimensions, des pertes de charges appréciables. Pour le traitement de végétaux moins hauts, par exemple des vignes, il existe des appareils qui délivrent simultanément, à partir d'un même ventilateur, des jets dirigés de bas en haut, sur la partie inférieure des végétaux, et des jets dirigés de haut en bas, vers la partie supérieure des mêmes végétaux. On peut ainsi traiter simultanément plusieurs lignes de végétaux. En effet, l'écoulement d'air inférieur, passant dans la zone des troncs, où le feuillage est moins abondant, peut traverser la ligne, et entraîner du produit jusqu'à la rangée suivante, cependant que l'écoulement d'air supérieur, surplombant le sommet des rangées, peut, lui-aussi, atteindre la rangée suivante.

Le document DE-A-2621298 décrit un appareillage qui comporte un mât vertical fixe sur lequel est montée une soufflerie comportant un ventilateur, et qui peut être actionnée à partir de la prise de force du tracteur ou par un moteur hydraulique ou électrique, et des ajutages disposés pour pulvériser un liquide de traitement dans le courant d'air produit par le ventilateur. Cet appareillage ne permet pas un traitement des végétaux simultanément par le haut et par le bas. En outre, il n'est pas prévu de moyens pour abaisser le bras vertical fixe en vue des déplacements.

Le document AU-A-449483 qui comporte toutes les caractéristiques du préambule de la revendication 1 décrit un appareillage comportant plusieurs souffleries du type indiqué ci-dessus, à ventilateur entraîné par un moteur hydraulique, montées de façon fixe sur un mât qui peut basculer pour les déplacements en pivotant sur un axe horizontal.

La présente invention a pour but de fournir un appareillage qui soit à la fois moins complexe et moins coûteux que les dispositifs connus, tout en état d'emploi plus simple.

Le dispositif selon l'invention se caractérise par les éléments de la partie caractérisante de la revendication 1.

Pour obtenir ce résultat, l'invention fournit un dispositif mobile de traitement de végétaux arborescents, tels qu'arbres fruitiers ou vignes, comprenant plusieurs souffleries équipées chacune d'un ventilateur hélicoïdal à axe horizontal, et de préférence parallèle à l'avancement, des ajutages pour un liquide de traitement à pulvériser étant prévus à la sortie de chacune des souffleries et disposés pour introduire le liquide de traitement dans le courant d'air engendré par le ventilateur, ces souffleries étant portées par un même châssis à des hauteurs différentes, au moins la plus haute étant réglable en hauteur de façon continue et pouvant être déplacée entre une position basse, qui permet les déplacements du dispositif et son passage sous des obstacles, et une position haute, qui permet l'envoi d'un courant d'air vers la partie haute des végétaux, ce châssis comportant un bâti fixe vertical sur lequel est monté un bâti mobile qui porte la soufflerie la plus haute à sa partie supérieure, caractérisé en ce que les ventilateurs sont à axe horizontal, et de préférence parallèle à l'avancement, et en ce que le dispositif comporte des moyens permettant au bâti mobile et donc à la soufflerie la plus haute de se déplacer verticalement le long du bâti fixe en occupant une série continue de positions hautes et au moins une position basse, et il est prévu au moins un arbre de transmission télescopique qui permet, grâce à un renvoi en T, d'entraîner à partir d'une prise de force la soufflerie la plus haute au moins quand le bâti mobile se trouve dans la série de positions hautes.

De préférence, la soufflerie la plus basse est fixe, située à faible hauteur au-dessus du sol et apte à projeter un courant d'air vers la partie basse des végétaux.

Le fait de prévoir deux souffleries indépendantes permet la suppression des canalisations destinées à transférer le courant d'air depuis la soufflerie placée en partie basse vers les orifices d'éjection situés en partie haute. En conséquence, elle permet d'obtenir un réglage en continu de la hauteur du point de sortie haute du courant d'air. Cependant, l'abaissement de la soufflerie haute permet, de façon très simple, d'aboutir à un véhicule qui pour les déplacements en dehors des lieux d'utilisation présente une hauteur réduite, et est, par conséquent, d'une bonne maniabilité.

On aurait pu prévoir pour l'une ou l'autre des souffleries, ou les deux, des moteurs d'entraînement autonomes, hydrauliques ou électriques. La solution préférée, qui permet l'entraînement simultané de toutes les souffleries par la prise de force d'un tracteur, exige moins d'entretien, et son prix de revient est moins élevé.

Avantageusement, le dispositif comprend des moyens pour mettre en action ledit arbre de transmission télescopique seulement quand le bâti mobile est dans une position haute.

Si la position basse est seulement une position de transport, la soufflerie n'est pas entraînée quand le bâti mobile est dans la position basse.

Si la soufflerie doit être entraînée quand le bâti mobile est dans la position basse, un arbre de transmission de faible longueur sera mis en action à la place de l'arbre de transmission utilisé pour les positions hautes. Si, dans ce cas, le bâti mobile peut occuper plusieurs positions basses, l'arbre de transmission de faible longueur sera, lui aussi, télescopique. On évite ainsi d'avoir à utiliser un seul arbre télescopique pour une gamme étendue de hauteurs de bâti.

Cette solution, simple et peu coûteuse, permet d'obtenir des hauteurs élevées pour la seconde soufflerie, si bien qu'on peut l'adapter de façon à ce que le jet d'air, en toute circonstance, puisse passer au-dessus de la cime des arbres d'une rangée, pour atteindre une ou plusieurs autres rangées situées plus loin du dispositif.

Les feuilles des arbres ou arbustes, étant sollicitées à la fois dans deux directions par les courants d'air qui les atteignent simultanément à partir de la soufflerie basse et à partir de la soufflerie haute, n'ont pas tendance à s'appliquer les unes contre les autres à la façon des feuilles d'un toit, mais sont agitées de façon désordonnée, ce qui facilite l'accès du produit de traitement à toute leur surface, d'où une amélioration de l'efficacité du traitement.

Pour éviter tout risque d'endommager le ou les arbres télescopiques de transmission, au cas d'un mouvement trop important vers le haut ou vers le bas, il est avantageusement prévu que des butées effaçables empêchent le passage du bâti d'une série de positions à l'autre série de positions, lorsque le ou les arbres de transmission ne sont pas dans la position correcte. On prévoit, en particulier, que, pour mettre un arbre de transmission en position inactive, il soit déboîté en un endroit convenable de façon à venir occuper un autre emplacement, et que sa présence dans cet emplacement, et elle seule, permette l'effacement d'une butée mécanique, et le passage de la série de positions correspondantes à l'autre série de positions. Ainsi, tout risque d'endommager une transmission par un mouvement inconsidéré du bâti mobile est écarté.

Suivant une autre modalité avantageuse, le dispositif comporte des volets associés à la seconde soufflerie pour orienter le courant d'air produit, et des moyens pour commander à distance la position des volets.

L'opérateur peut ainsi, à volonté, adapter à la fois la hauteur et la largeur des courants d'air à la nature des végétaux qu'il doit traiter.

L'invention va maintenant être exposée de façon plus détaillée avec un exemple pratique, non limitatif, illustré avec les dessins parmi lesquels :

Figure 1 est une vue schématique de côté d'un dispositif selon l'invention, et

Figure 2 est une vue, prise depuis l'arrière, du dispositif de la figure 1.

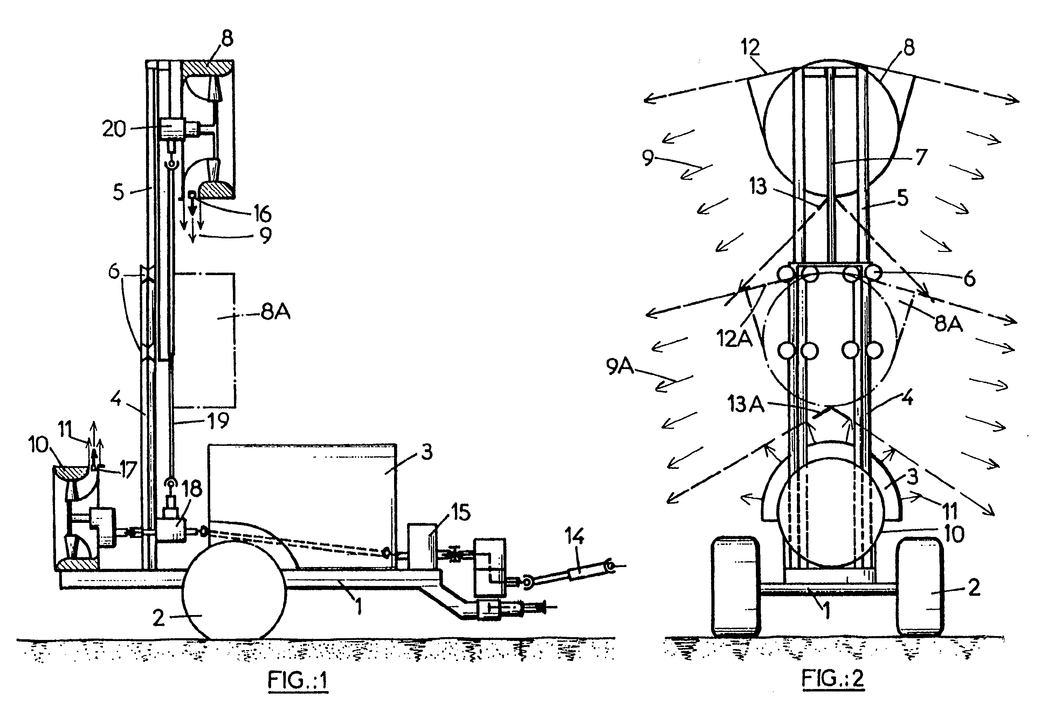

Le dispositif décrit aux figures comprend un châssis porteur 1, équipé de roues 2, et qui supporte une cuve à liquide de traitement 3. Un bâti vertical 4, comprenant deux montants à section carrée, disposés avec leurs faces 45° du sens de la marche, porte un bâti mobile 5, qui peut se déplacer le long du bâti fixe 4, grâce à des galets biconiques 6. Un vérin 7 assure la montée et la descente du bâti mobile. Le bâti mobile porte une soufflerie haute 8, dont l'axe est parallèle au sens de marche. Sur la figure, on a représenté la soufflerie avec une admission axiale dirigée vers l'avant, à droite sur la figure 1, et la sortie de l'air latérale selon les flèches 9. Avantageusement, la soufflerie 8 est du type décrit dans le document FR-A-2.153.671 au nom de la demanderesse.

Bien entendu, la forme des montants peut varier, et les galets peuvent être cylindriques, ou remplacés par des patins. Le vérin peut être remplacé lui-aussi par un dispositif équivalent, par exemple à câble.

Le châssis 1 porte encore, vers l'arrière, une soufflerie basse 10, qui est avantageusement du même type que la soufflerie 8, et projette de l'air latéralement et vers le haut, selon les flèches 11.

La disposition des souffleries 8 et 10, avec aspiration radiale ou latérale vers l'avant ou vers l'arrière, n'est pas nécessairement celle qui est représentée. En effet, il est nécessaire de concilier les impératifs de non-recyclage de produits provenant d'une soufflerie dans l'autre soufflerie, et d'autre part, d'obtenir, pour la soufflerie haute, la position basse la moins élevée possible en vue d'abaisser le centre de gravité pour le transport. La longueur du châssis, la hauteur de la cuve, la position du bâti 4 par rapport à la cuve et à la soufflerie 10 sont autant de facteurs qui permettent de préconiser une solution ou une autre tout en restant dans le cadre de l'invention.

Des volets déflecteurs 12-13 sont situés à proximité des sorties d'air de la soufflerie supérieure 8. Ils permettent de diriger le courant d'air dans la direction désirée, c'est-à-dire ni vers le haut, où le produit serait perdu, ni vers le bas, où il retomberait en direction de la cuve.

Sur les figures, on a représenté en trait plein la position la plus haute de la soufflerie 8, et en tirets, une position assez basse 8A de la même soufflerie haute. Dans cette position assez basse, on voit que les volets 12A et surtout 13A ont une orientation différente. Pour une orientation mieux adaptée du courant d'air, les flèches 9A, à la figure 2, montrent en effet que, lorsque la soufflerie 8A est moins élevée, le courant d'air doit se rapprocher d'une direction moyenne horizontale.

On a représenté en 14 un arbre de transmission mécanique, relié à la prise de force du tracteur, non représenté. L'arbre de transmission est relié à une pompe à piston 15, qui extrait le liquide de traitement du réservoir 3 et l'envoie à des ajutages 16-17 disposés à la sortie des souffleries 8 et 10. Ces ajutages, disposés en arc de cercle autour de chacune des souffleries, sont alimentés par des conduits rigides ou flexibles, non représentés, qui les relient à la pompe 15. L'arbre de transmission 14 entraîne également les ventilateurs des souffleries 8 et 10, par l'intermédiaire d'un renvoi en T 18. Une transmission télescopique 19 est placée entre le renvoi en T 18 et un multiplicateur 20 placé en bout d'arbre du ventilateur de la soufflerie 8 pour l'entraîner. Des butées escamotables limitent la course du bâti mobile, pour éviter d'endommager la transmission télescopique.

Dans une variante non représentée, la transmission 19 peut être désaccouplée du renvoi 16 et placée dans un logement approprié. Quand elle est dans le logement, elle déplace une pièce de verrouillage, ce qui permet de faire descendre le bâti mobile 5 jusqu'à ce que la soufflerie soit dans la position de transport, juste au-dessus de la cuve 3, sans risquer d'endommager la transmission ou le renvoi 18.

L'homme de métier comprendra aisément qu'on peut avoir plusieurs transmissions 19 interchangeables, de longueurs différentes, télescopiques ou non.

## Revendications

1. Dispositif mobile de traitement de végétaux arborescents, tels qu'arbres fruitiers ou vignes, comprenant plusieurs souffleries (8, 10) équipées chacune d'un ventilateur hélicoïdal, des ajutages (16, 17) pour le liquide de traitement à pulvériser étant prévus à la sortie de chacune des souffleries, et disposés pour introduire le liquide de traitement dans le courant d'air engendré par le ventilateur, ces souffleries (8, 10) étant portées par un même châssis (4, 5) à des hauteurs différentes, au moins la soufflerie la plus haute (8) étant réglable en hauteur et pouvant être déplacée entre une position basse, qui permet les déplacements du dispositif et son passage sous des obstacles et une position haute, qui permet l'envoi d'un courant d'air vers la partie haute des végétaux, ce châssis comportant un bâti fixe (4) vertical sur lequel est monté un bâti mobile (5) qui porte la soufflerie la plus haute (8) à sa partie supérieure, caractérisé en ce que les ventilateurs sont à axe horizontal, et de préférence parallèle à l'avancement, et en ce que le dispositif comporte des moyens permettant au bâti mobile (5) et donc à la soufflerie la plus haute (8) de se déplacer verticalement le long du bâti fixe (4) en occupant une série continue de positions hautes et au moins une position basse, et il est prévu au moins un arbre de transmission télescopique (19) qui permet, grâce à un renvoi en T (18), d'entraîner à partir d'une prise de force la soufflerie la plus haute au moins quand le bâti mobile se trouve dans la série de positions hautes.

2. Dispositif selon la revendication 1, caractérisé en ce que la soufflerie la plus basse (10) est fixe, située à faible hauteur au-dessus du sol et apte à projeter un courant d'air vers la partie basse des végétaux.

3. Dispositif selon la revendication 1 ou 2, caractérisé en ce qu'il comprend des moyens pour mettre en action ledit arbre de transmission télescopique (19) seulement quand le bâti mobile est dans une position haute.

4. Dispositif selon l'une des revendications 1 à 3, dans lequel le bâti mobile peut occuper une série de positions hautes et une série de positions basses, caractérisé en ce qu'il est prévu au moins un arbre de transmission télescopique pour entraîner la soufflerie la plus haute dans la série de positions hautes et un autre arbre de transmission télescopique pour entraîner la soufflerie la plus haute dans la série des positions basses.

5. Dispositif selon la revendication 4, caractérisé en ce qu'il est prévu des butées effaçables pour empêcher le passage du bâti mobile d'une série de positions à une autre lorsque le ou les arbres de transmission ne sont pas dans une situation correcte.

6. Dispositif selon l'une des revendications 1 à 5, caractérisé en ce que la même prise de force entraîne toutes les souffleries.

7. Dispositif selon l'une des revendications 1 à 6, caractérisé en ce qu'il comporte des volets (12, 13) associés à la soufflerie la plus haute pour orienter le courant d'air produit, et des moyens pour commander à distance la position des volets.

## Patentansprüche

1. Bewegliche Vorrichtung zum Behandeln von baumartigen Pflanzen, wie Obstbäumen und Rebstöcken, mit mehreren Gebläsen (8, 10), die jeweils mit einem Schraubenlüfter ausgerüstet sind, wobei Düsen (16, 17) für die zu zerstäubende Behandlungsflüssigkeit am Auslaß jedes Gebläses vorgesehen sind und dazu dienen, die Behandlungsflüssigkeit in den vom Lüfter erzeugten Luftstrom einzuführen, wobei die Gebläse (8, 10) vom gleichen Chassis (4, 5) auf unterschiedlichen Höhen getragen werden und mindestens das oberste Gebläse (8) höhenverstellbar ist zwischen einer unteren Stellung, die Verschiebungen der Vorrichtung sowie ihr Durchtritt unter Hindernissen erlaubt, und einer oberen Stellung, die den Ausstoß eines Luftstroms gegen den oberen Teil der Pflanzen erlaubt, wobei das Chassis einen vertikalen ortsfesten Rahmen (4) aufweist, an dem ein beweglicher Rahmen (5) angebracht ist, der an seinem oberen Teil das oberste Gebläse (8) trägt, dadurch gekennzeichnet, daß die Gebläse mit horizontaler Achse, vorzugsweise parallel zur Vorwärtsrichtung, angeordnet sind, und daß die Vorrichtung Mittel aufweist, die dem beweglichen Rahmen (5) und somit dem obersten Gebläse (8) erlauben, sich vertikal entlang des ortsfesten Rahmens (4) zu verschieben, wobei sie eine kontinuierliche Reihe oberer Stellungen und mindestens eine untere Stellung einnehmen, und daß mindestens eine teleskopierbare Transmissionswelle (9) vorgesehen ist, die mittels eines T-Getriebes (18) eine Antriebsverbindung zwischen einem Antrieb und dem obersten Gebläse ermöglicht, wenn sich der bewegliche Rahmen in der Reihe der oberen Stellungen befindet.

2. Vorrichtung nach Anspruch 1, dadurch gekennzeichnet, daß das unterste Gebläse (10) ortsfest ist, auf kleiner Höhe über dem Boden angeordnet ist und dazu dient, einen Luftstrom gegen den unteren Teil der Pflanzen zu blasen.

3. Vorrichtung nach Anspruch 1 oder 2, gekennzeichnet durch Mittel, die eine Inbetriebnahme der teleskopierbaren Transmissionswelle (19) nur dann zulassen, wenn sich der bewegliche Rahmen in einer oberen Stellung befindet.

4. Vorrichtung nach einem der Ansprüche 1 bis 3, bei der der bewegliche Rahmen eine Reihe unterer Stellungen und eine Reihe oberer Stellungen einnehmen kann, dadurch gekennzeichnet, daß er mit mindestens einer teleskopierbaren Transmissionswelle für den Antrieb des obersten Gebläses in der Reihe oberer Stellungen und einer teleskopierbaren Transmissionswelle für den Antrieb des obersten Gebläses in der Reihe unterer Stellungen versehen ist.

5. Vorrichtung nach Anspruch 4, dadurch gekennzeichnet, daß sie mit einziehbaren Anschlägen versehen ist, um den Durchgang des beweglichen Rahmens von einer Reihe von Stellungen zu einer anderen zu verhindern, wenn die Transmissionswelle bzw. Transmissionswellen sich nicht in der richtigen Lage befindet bzw. befinden.

6. Vorrichtung nach einem der Ansprüche 1 bis 5, dadurch gekennzeichnet, daß derselbe Antrieb für sämtliche Gebläse vorgesehen ist.

7. Vorrichtung nach einem der Ansprüche 1 bis 6, dadurch gekennzeichnet, daß sie Klappen (12, 13) aufweist, die dem obersten Gebläse zum Führen des erzeugten Luftstromes zugeordnet sind, und daß Mittel zur Fernsteuerung der Position der Klappen vorgesehen sind.

## Claims

1. A mobile apparatus for the treatment of arborescent plants, such as fruit-bearing trees or vines, comprising a plurality of blowers (8, 10) each provided with a helicoidal fan, nozzles (16, 17) for the treatment liquid to be vaporised being provided at the outlet of each of the blowers and being arranged to introduce the treatment liquid into the current of air generated by the fan, these blowers (8, 10) being carried on a common chassis (4, 5) at different heights, at least the highest blower (8) being adjustable in height and being capable of being moved between a low position, which allows movements of the apparatus and its passage beneath obstacles, and a high position, which allows a current of air to be directed towards the high part of the plants, this chassis comprising a fixed vertical frame (4) on which there is mounted a mobile frame (5) which carries the highest blower (8) at its upper part, characterised in that the fans are on a horizontal axis and preferably parallel to the direction of forward movement and in that the apparatus comprises means enabling the mobile frame (5) and thus the highest blower (8) to be moved vertically along the fixed frame (4) to occupy a continuous series of high positions and at least one low position, and at least one telescopic transmission shaft (19) is provided which, due to a T drive-shaft (18), allows the highest blower to be power-driven at least when the mobile frame is located in the series of high positions.

2. An apparatus according to claim 1, characterised in that the lowest blower (10) is fixed, located at a small height above the ground and suitable for directing a current of air towards the low part of the plants.

3. An apparatus according to claims 1 or 2, characterised in that it comprises means for actuating the said telescopic transmission shaft (19) only when the mobile frame is in a high position.

4. An apparatus according to any one of claims 1 to 3, in which the mobile frame can occupy a series of high positions and a series of low positions, characterised in that at least one telescopic transmission shaft is provided to drive the highest blower in the series of high positions and another telescopic transmission shaft is provided to drive the highest blower in the series of low positions.

5. An apparatus according to claim 4, characterised in that removable stops are provided to prevent the passage of the mobile frame from one series of positions to another when the transmission shaft or shafts are not in a correct position.

6. An apparatus according to any one of claims 1 to 5, characterised in that the same power source drives all the blowers.

7. An apparatus according to any one of claims 1 to 6, characterised in that it comprises shutters (12, 13) associated with the highest blower to direct the current of air produce. ar means to control remotely the position of the shutter .

FIG.:2

FIG.:1